# EUROPEAN PATENT SPECIFICATION

(11) **EP 4 258 264 B1**
(45) Date of publication and mention of the grant of the patent: **23.07.2025**
(21) Application number: 22893955.9
(22) Date of filing: 13.12.2022
(51) Int. Cl.: G10L 25/51, G10L 25/30, G06N 3/044, G06N 3/0464, G06N 3/08

(54) **AUDIO RECOGNITION**
AUDIOERKENNUNG
RECONNAISSANCE AUDIO

(30) Priority: 18.02.2022 CN 202210152610
(43) Date of publication of application: 11.10.2023
(73) Proprietor: Honor Device Co., Ltd., Shenzhen, Guangdong 518040 (CN)
(72) Inventor: LU, Caixia, Shenzhen, Guangdong 518040 (CN)
(74) Representative: Epping - Hermann - Fischer
(86) International application number: PCT/CN2022/138816
(87) International publication number: WO 2023/155572

(56) References cited:
- WO-A1-2021/202023
- CN-A- 111 477 250
- CN-A- 111 933 188
- CN-A- 113 239 872
- US-A1- 2021 104 230
- US-A1- 2021 183 406
- US-B1- 11 132 990

## Description

This application claims priority to Chinese Patent Application No. 202210152610.8, filed with the China National Intellectual Property Administration on February 18, 2022 and entitled "AUDIO RECOGNITION METHOD AND AUDIO RECOGNITION APPARATUS".

### TECHNICAL FIELD

This application relates to the audio field, and in particular, to an audio recognition method and an audio recognition apparatus.

### BACKGROUND

Audio signals carry a large amount of information about the daily environment and the physical events that occur therein, have rich information, and have unique advantages in many occasions in which the senses of vision, touch, and smell are inappropriate. The audio-based sound event detection technology is applied to terminal devices, and through which sound events such as alarms, smoke detectors, household appliances, car speakers, doorbells, knocking sounds, running water sounds, infant crying, and shouting can be recognized, to be used as auxiliary information to help users, especially the disabled, understand the surrounding environment.

However, due to various complex characteristics of environmental sounds, the average accuracy of the sound event detection technology can only reach 40%, resulting in poor user experience.

Therefore, there is an urgent need for an audio recognition method that can improve the accuracy of sound event detection.

US 2021/183406 A1 relates to an embedded sensor comprising an audio detector; a digital signal processor configured to receive signals from the audio detector and to identify an environment in which the embedded sensor is located; a library for storing a statistical model associated with the identified environment, wherein the digital signal processor is configured to associate a probability with a detected audible event based on the statistical model; a rules engine configured to receive the probability associated with the detected audible event and to transmit a report of the detected audible event.

WO 2021/202023 A1 relates to a device to perform sound detection, comprising one or more processors comprising: a buffer configured to store audio data; and a target sound detector comprising a first stage and a second stage, the first stage including a binary target sound classifier configured to process the audio data, the first stage configured to activate the second stage in response to detection of a target sound by the first stage, and the second stage configured to receive the audio data from the buffer in response to the detection of the target sound.

US 2021/104230 A1 relates to a method for recognising at least one of a non-verbal sound event and a scene in an audio signal comprising a sequence of frames of audio data, the method comprising for each frame of the sequence: processing the frame of audio data to extract multiple acoustic features for the frame of audio data; and classifying the acoustic features to classify the frame by determining, for each of a set of sound classes, a score that the frame represents the sound class; processing the sound class scores for multiple frames of the sequence of frames to generate, for each frame, a sound class decision for each frame; and processing the sound class decisions for the sequence of frames to recognise the at least one of a non-verbal sound event and a scene.

### SUMMARY

This application provides an audio recognition method and an audio recognition apparatus, which can improve the accuracy of sound event detection. The invention is set out in the appended claims.

According to a first aspect, this application provides an audio recognition method, the method including: acquiring a to-be-detected audio signal; determining that an acquisition scenario of the to-be-detected audio signal is a first scenario according to the to-be-detected audio signal; and determining, based on the to-be-detected audio signal by using a sound event recognition model corresponding to the first scenario, a sound event identified by the to-be-detected audio signal, where the sound event recognition model corresponding to the first scenario is a neural network model trained by using an audio signal in the first scenario and configured to identify a sound event in the first scenario based on the audio signal.

There may be a plurality of possible implementations for an audio recognition device to acquire the to-be-detected audio signal.

In a possible implementation, the audio recognition device may acquire the to-be-detected audio signal in real time.

In another possible implementation, the audio recognition device may receive an audio signal from another device, to obtain the to-be-detected audio signal.

In still another possible implementation, the audio recognition device may use an acquired historical audio signal as the to-be-detected audio signal.

In this application, an existing scenario detection algorithm may be used to determine that the acquisition scenario of the to-be-detected audio signal is the first scenario according to the to-be-detected audio signal, and after preliminary classification is performed on the to-be-detected audio signal based on the first scenario, sound event detection is performed.

The sound event recognition model corresponding to the first scenario is trained by using an audio signal in the first scenario. The audio signal in the first scenario is any one or more audio signals that may appear in the first scenario.

When there is one audio signal in the first scenario, the one audio signal corresponds to one sound event, and one sound event recognition model can be trained according to the one audio signal. That is, the audio signal, the sound event, and the sound event recognition model are in a one-to-one correspondence. The trained sound event recognition model can be configured to determine, based on the to-be-detected audio signal, whether the sound event corresponding to the to-be-detected audio signal is a sound event corresponding to the sound event recognition model or not.

When there are a plurality of audio signals in the first scenario, each of the plurality of audio signals corresponds to one sound event, and a plurality of sound event recognition models can be trained according to the plurality of audio signals. That is, the audio signals, the sound events, and the sound event recognition models are in a one-to-one correspondence. Each of the plurality of trained sound event recognition models can be configured to determine, based on the to-be-detected audio signal, whether the sound event corresponding to the to-be-detected audio signal is a sound event corresponding to the sound event recognition model or not.

According to the audio recognition method provided in this application, preliminary classification is first performed on a to-be-detected audio signal according to a scenario detection algorithm, to determine that an acquisition scenario of the to-be-detected audio signal is a first scenario, and then sound event detection is performed on the to-be-detected audio signal by using a sound event recognition model corresponding to the first scenario. In this way, compared with directly using a sound event recognition model corresponding to different scenarios to perform sound event detection on the to-be-detected audio signal, the amount of calculation can be reduced, the interference of sound events in different scenarios can be reduced, and the sound event corresponding to the to-be-detected audio signal can be more accurately recognized, thereby improving the accuracy of sound event detection.

The to-be-detected audio signal includes a plurality of audio frames; and the determining that an acquisition scenario of the to-be-detected audio signal is a first scenario according to the to-be-detected audio signal includes: inputting each of the plurality of audio frames into a scenario recognition model, to obtain scenario information of each audio frame, where the scenario recognition model is a neural network model trained by using audio frames in a plurality of scenarios and configured to determine an acquisition scenario of an audio frame based on the audio frame, and the scenario information of each audio frame is used for indicating a probability that an acquisition scenario of each audio frame is each of the plurality of scenarios; and determining that the acquisition scenario of the to-be-detected audio signal is the first scenario in the plurality of scenarios according to the scenario information of each audio frame.

After acquiring the to-be-detected audio signal, the audio recognition device may divide the to-be-detected audio signal into a plurality of audio frames, and input each of the plurality of audio frames into the scenario recognition model, to obtain the scenario information of each audio frame. The scenario information of each audio frame is used for representing the probability that the acquisition scenario of each audio frame is each of the plurality of scenarios. The audio recognition device may determine that the acquisition scenario of the to-be-detected audio signal is the first scenario in the plurality of scenarios according to the scenario information of each audio frame.

It should be understood that, a sum of the probabilities that each audio frame belongs to each of the plurality of scenarios is 1.

According to the audio recognition method provided in this application, it is determined based on the scenario recognition model that the acquisition scenario of the to-be-detected audio signal is the first scenario. The accuracy of the scenario recognized by using this method is relatively high, so that the sound event corresponding to the to-be-detected audio signal can be more accurately recognized, thereby improving the accuracy of sound event detection.

With reference to the first aspect, in some implementations of the first aspect, the determining that the acquisition scenario of the to-be-detected audio signal is the first scenario in the plurality of scenarios according to the scenario information of each audio frame includes: collecting statistics on a quantity of audio frames belonging to each of the plurality of scenarios in the plurality of audio frames; and determining the first scenario as the acquisition scenario of the to-be-detected audio signal when a quantity of audio frames belonging to the first scenario in the plurality of scenarios in the plurality of audio frames meets a first preset condition and a probability indicated by scenario information corresponding to the audio frames belonging to the first scenario in the plurality of audio frames meets a second preset condition.

With reference to the first aspect, in some implementations of the first aspect, the scenario recognition model is trained based on audio frames in at least one of a road scenario, a subway scenario, a home scenario, or an office scenario.

With reference to the first aspect, in some implementations of the first aspect, the to-be-detected audio signal includes a plurality of audio frames, the sound event recognition model corresponding to the first scenario includes at least one sound event recognition model, the at least one sound event recognition model includes a first sound event recognition model, and the first sound event recognition model is trained by using an audio frame identifying a first sound event in the first scenario; and the determining, based on the to-be-detected audio signal by using a sound event recognition model corresponding to the first scenario, a sound event identified by the to-be-detected audio signal includes: inputting the plurality of audio frames into the first sound event recognition model respectively, to obtain sound event information identified by the plurality of audio frames, where sound event information of each audio frame in the sound event information of the plurality of audio frames is used for indicating a probability that the each audio frame identifies the first sound event; and determining, when sound event information identified by a first audio frame in the plurality of audio frames meets a third preset condition, the first sound event as the sound event identified by the to-be-detected audio signal.

Generally, a commonly used sound event recognition model is a neural network model based on a convolutional recurrent neural network (convolutional recurrent neural network, CRNN) architecture, which is not limited in this application.

The first sound event recognition model may be any one of the at least one sound event recognition model, which is not limited in this application. It should be understood that, the first sound event recognition model is trained in advance, can recognize the first sound event, and is preset in the audio recognition device.

The third preset condition may be adjusted according to an actual application scenario, which is not limited in this application.

The audio recognition device may input the plurality of audio frames into the first sound event recognition model respectively, to obtain sound event information identified by the plurality of audio frames, and determine, when sound event information identified by a first audio frame in the plurality of audio frames meets a third preset condition, the first sound event as the sound event identified by the to-be-detected audio signal.

According to the audio recognition method provided in this application, the sound event corresponding to the to-be-detected audio signal is determined based on the sound event recognition model. The accuracy of the sound event recognized by using this method is relatively high, thereby improving the accuracy of sound event detection.

With reference to the first aspect, in some implementations of the first aspect, the sound event information identified by the first audio frame meets the third preset condition, and sound event information identified by a second audio frame in a preset quantity of frames previous to the first audio frame meets a fourth preset condition, then a time point corresponding to the second audio frame is a start time point of the first sound event.

With reference to the first aspect, in some implementations of the first aspect, the first scenario is the road scenario, and the sound event recognition model corresponding to the first scenario includes at least one of the following: a sound event recognition model for whistles, a sound event recognition model for alarm sounds, a sound event recognition model for crash sounds, or a sound event recognition model for car passing sounds.

With reference to the first aspect, in some implementations of the first aspect, the first scenario is the subway scenario, and the sound event recognition model corresponding to the first scenario includes at least one of the following: a sound event recognition model for train passing sounds, a sound event recognition model for compartment crash sounds, or a sound event recognition model for subway station announcement sounds.

With reference to the first aspect, in some implementations of the first aspect, the first scenario is the home scenario, and the sound event recognition model corresponding to the first scenario includes at least one of the following: a sound event recognition model for vacuum cleaning sounds of vacuum cleaners, a sound event recognition model for washing sounds of washing machines, a sound event recognition model for dish collision sounds, a sound event recognition model for infant crying, or a sound event recognition model for faucet dripping sounds.

With reference to the first aspect, in some implementations of the first aspect, the first scenario is the office scenario, and the sound event recognition model corresponding to the first scenario includes at least one of the following: a sound event recognition model for ringtones, a sound event recognition model for keystroke sounds, or a sound event recognition model for meeting invitation sounds.

According to a second aspect, this application provides an audio recognition apparatus, including an acquisition module and a processing module. The acquisition module is configured to: acquire a to-be-detected audio signal; and the processing module is configured to: determine that an acquisition scenario of the to-be-detected audio signal is a first scenario according to the to-be-detected audio signal; and determine, based on the to-be-detected audio signal by using a sound event recognition model corresponding to the first scenario, a sound event identified by the to-be-detected audio signal, where the sound event recognition model corresponding to the first scenario is a neural network model trained by using an audio signal in the first scenario and configured to identify a sound event in the first scenario based on the audio signal.

With reference to the second aspect, in some implementations of the second aspect, the to-be-detected audio signal includes a plurality of audio frames; and the processing module is further configured to: input each of the plurality of audio frames into a scenario recognition model, to obtain scenario information of each audio frame, where the scenario recognition model is a neural network model trained by using audio frames in a plurality of scenarios and configured to determine an acquisition scenario of an audio frame based on the audio frame, and the scenario information of each audio frame is used for indicating a probability that an acquisition scenario of each audio frame is each of the plurality of scenarios; and determine that the acquisition scenario of the to-be-detected audio signal is the first scenario in the plurality of scenarios according to the scenario information of each audio frame.

With reference to the second aspect, in some implementations of the second aspect, the processing module is further configured to: collect statistics on a quantity of audio frames belonging to each of the plurality of scenarios in the plurality of audio frames; and determine the first scenario as the acquisition scenario of the to-be-detected audio signal when a quantity of audio frames belonging to the first scenario in the plurality of scenarios in the plurality of audio frames meets a first preset condition and a probability indicated by scenario information corresponding to the audio frames belonging to the first scenario in the plurality of audio frames meets a second preset condition.

With reference to the second aspect, in some implementations of the second aspect, the scenario recognition model is trained based on audio frames in at least one of a road scenario, a subway scenario, a home scenario, or an office scenario.

With reference to the second aspect, in some implementations of the second aspect, the to-be-detected audio signal includes a plurality of audio frames, the sound event recognition model corresponding to the first scenario includes at least one sound event recognition model, the at least one sound event recognition model includes a first sound event recognition model, and the first sound event recognition model is trained by using an audio frame identifying a first sound event in the first scenario; and the processing module is further configured to: input the plurality of audio frames into the first sound event recognition model respectively, to obtain sound event information identified by the plurality of audio frames, where sound event information of each audio frame in the sound event information of the plurality of audio frames is used for indicating a probability that the each audio frame identifies the first sound event; and determine, when sound event information identified by a first audio frame in the plurality of audio frames meets a third preset condition, the first sound event as the sound event identified by the to-be-detected audio signal.

With reference to the second aspect, in some implementations of the second aspect, the sound event information identified by the first audio frame meets the third preset condition, and sound event information identified by a second audio frame in a preset quantity of frames previous to the first audio frame meets a fourth preset condition, then a time point corresponding to the second audio frame is a start time point of the first sound event.

With reference to the second aspect, in some implementations of the second aspect, the first scenario is the road scenario, and the sound event recognition model corresponding to the first scenario includes at least one of the following: a sound event recognition model for whistles, a sound event recognition model for alarm sounds, a sound event recognition model for crash sounds, or a sound event recognition model for car passing sounds.

With reference to the second aspect, in some implementations of the second aspect, the first scenario is the subway scenario, and the sound event recognition model corresponding to the first scenario includes at least one of the following: a sound event recognition model for train passing sounds, a sound event recognition model for compartment crash sounds, or a sound event recognition model for subway station announcement sounds.

With reference to the second aspect, in some implementations of the second aspect, the first scenario is the home scenario, and the sound event recognition model corresponding to the first scenario includes at least one of the following: a sound event recognition model for vacuum cleaning sounds of vacuum cleaners, a sound event recognition model for washing sounds of washing machines, a sound event recognition model for dish collision sounds, a sound event recognition model for infant crying, or a sound event recognition model for faucet dripping sounds.

With reference to the second aspect, in some implementations of the second aspect, the first scenario is the office scenario, and the sound event recognition model corresponding to the first scenario includes at least one of the following: a sound event recognition model for ringtones, a sound event recognition model for keystroke sounds, or a sound event recognition model for meeting invitation sounds.

According to a third aspect, this application provides an audio recognition apparatus, including a processor. The processor is coupled to a memory, and may be configured to execute instructions in the memory, to implement the method according to any possible implementation of the first aspect. Optionally, the terminal device further includes the memory. Optionally, the terminal device further includes a communication interface, and the processor is coupled to the communication interface.

According to a fourth aspect, this application provides a processor, including an input circuit, an output circuit, and a processing circuit. The processing circuit is configured to receive a signal by using the input circuit and transmit a signal by using the output circuit, so that the processor performs the method according to any possible implementation of the first aspect.

In a specific implementation process, the processor may be a chip, the input circuit may be an input pin, the output circuit may be an output pin, and the processing circuit may be a transistor, a gate circuit, a trigger, any logic circuit, or the like. An input signal received by the input circuit may be received and inputted by, for example, but not limited to, a receiver, a signal outputted by the output circuit may be, for example, but not limited to, a signal outputted to a transmitter and transmitted by the transmitter. In addition, the input circuit and the output circuit may be a same circuit, the circuit is used as an input circuit and an output circuit respectively at different moments. Specific implementations of the processor and the various circuits are not limited in this application.

According to a fifth aspect, this application provides a processing apparatus, including a processor and a memory. The processor is configured to read instructions stored in the memory, and can receive a signal through the receiver and transmit a signal through the transmitter to perform the method according to any possible implementation of the first aspect.

Optionally, there is one or more processors, and there is one or more memories.

Optionally, the memory may be integrated in the processor, or the memory and the processor are separately disposed.

In a specific implementation process, the memory may be a non-transitory (non-transitory) memory such as a read only memory (read only memory, ROM), and the memory and the processor may be integrated on a same chip, or may be arranged on different chips respectively. A type of the memory and an arrangement manner of the memory and the processor are not limited in this embodiment of this application.

It should be understood that, a related data exchange process, for example, sending indication information, may be a process of outputting indication information from the processor, and receiving capability information may be a process of receiving input capability information by the processor. Specifically, data outputted by the processor may be outputted to the transmitter, and input data received by the processor may be from the receiver. The transmitter and the receiver may be collectively referred to as a transceiver.

The processing apparatus according to the fifth aspect may be a chip. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory, where the memory may be integrated into the processor, or may be located outside the processor and exist independently.

According to a sixth aspect, this application provides a computer-readable storage medium. The computer-readable storage medium stores a computer program (which may also be referred to as code or an instruction). When the computer program is run on a computer, the computer is enabled to perform the method according to any possible implementation of the first aspect.

According to a seventh aspect, this application provides a computer program product. The computer program product includes a computer program (which may also be referred to as code or an instruction). When the computer program is run, the computer is enabled to perform the method according to any possible implementation of the first aspect.

### BRIEF DESCRIPTION OF DRAWINGS

FIG. 1 is a schematic diagram of a scenario for sound event detection used in an embodiment of this application;
FIG. 2 is a schematic flowchart of an audio recognition method according to an embodiment of this application;
FIG. 3 is a schematic flowchart of a scenario recognition method according to an embodiment of this application;
FIG. 4 is a schematic flowchart of a sound event recognition method according to an embodiment of this application;
FIG. 5 is a schematic block diagram of a sound event recognition model corresponding to a first scenario according to an embodiment of this application;
FIG. 6 is another schematic block diagram of a sound event recognition model corresponding to a first scenario according to an embodiment of this application;
FIG. 7 is still another schematic block diagram of a sound event recognition model corresponding to a first scenario according to an embodiment of this application;
FIG. 8 is another schematic block diagram of a sound event recognition model corresponding to a first scenario according to an embodiment of this application;
FIG. 9 is a schematic block diagram of an audio recognition apparatus according to an embodiment of this application; and
FIG. 10 is another schematic block diagram of an audio recognition apparatus according to an embodiment of this application.

### DESCRIPTION OF EMBODIMENTS

The following describes technical solutions of this application with reference to accompanying drawings.

To clearly describe technical solutions in embodiments of this application, terms such as "first" and "second" are used in the embodiments of this application to distinguish between same items or similar items that have basically the same functions or purposes. For example, a first preset condition and a second preset condition are merely intended to distinguish between different preset conditions, and are not intended to limit a sequence thereof. Those skilled in the art may understand that the terms "first", "second" and the like do not limit the quantity and execution order, and the terms "first", "second" and the like are not limited to be necessarily different.

It is to be noted that, in this application, terms such as "for example" or "such as" are used to indicate an example, illustration, or description. Any embodiment or design solution described as "for example" or "such as" in this application should not be construed as being more preferable or more advantageous than other embodiments or design solutions. Specifically, use of the terms such as "for example" or "such as" is intended to present related concepts in a specific manner.

In addition, "at least one" means one or more and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, "at least one of a, b, or c" may represent a, b, c, a and b, a and c, b and c, or a, b, and c, where a, b, and c may be singular or plural.

Audio signals carry a large amount of information about the daily environment and the physical events that occur therein, have rich information, and have unique advantages in many occasions in which the senses of vision, touch, and smell are inappropriate. Audio signals are generally considered to have relatively great correlation with vibration signals, but audio signals are non-contact, which avoids the difficulty of data acquisition of vibration signals. The computer audition (computer audition, CA) technology based on general audio/environmental sounds is a branch of artificial intelligence (artificial intelligence, AI) in the audio field, is directly oriented to various aspects of social and economic life, and has many applications in dozens of fields such as medical and health, manufacturing industry, transportation, security, warehousing, agriculture, forestry, animal husbandry, and fishery industries, water conservancy, environment and public facility management industry, construction industry, mining industry, daily life, identification, and military. It is a very practical technology.

For example, in the medical field, the human body and many diseases will produce various sounds. Aided diagnosis and treatment with the help of CA can not only partially reduce the burden on doctors, but also benefit consumers, which is an important aspect of smart medical care.

For example, in the field of robot manufacturing, the robots need to have the capability to sense the sounds of the surrounding environment. Sound event detection (sound event detection, AED) also belongs to CA from a perspective of technologies, and may be applied to various application scenarios of robots. For example, consumer-oriented service consumption robots recognize daily sound events in indoor environments; disaster response-oriented special operation robots recognize certain sound events in noisy environments and perform given operations; and valve hall intelligent patrol inspection-oriented industrial robots perform intelligent detection and state recognition on devices.

The sound event detection may also be referred to as "acoustic event detection" or "audio event detection (audio events detection)", which is not limited in this embodiment of this application.

However, due to the various complex characteristics of environmental sounds, the recognition accuracy of the CA technology in practical applications is relatively low and the development thereof is relatively slow. At present, the sound event detection technology in the CA technology may be applied to a terminal device. For example, the terminal device may recognize sound events such as alarms, smoke detectors, household appliances, car speakers, doorbells, knocking sounds, running water sounds, infant crying, and shouting, to be used as auxiliary information to help users, especially the disabled, understand the surrounding environment. However, the average accuracy rate can only reach 40%, resulting in poor user experience. Therefore, there is an urgent need for an audio recognition method that can improve the accuracy of sound event detection.

To better understand the embodiments of this application, scenarios to which the embodiments of this application are applicable are first described.

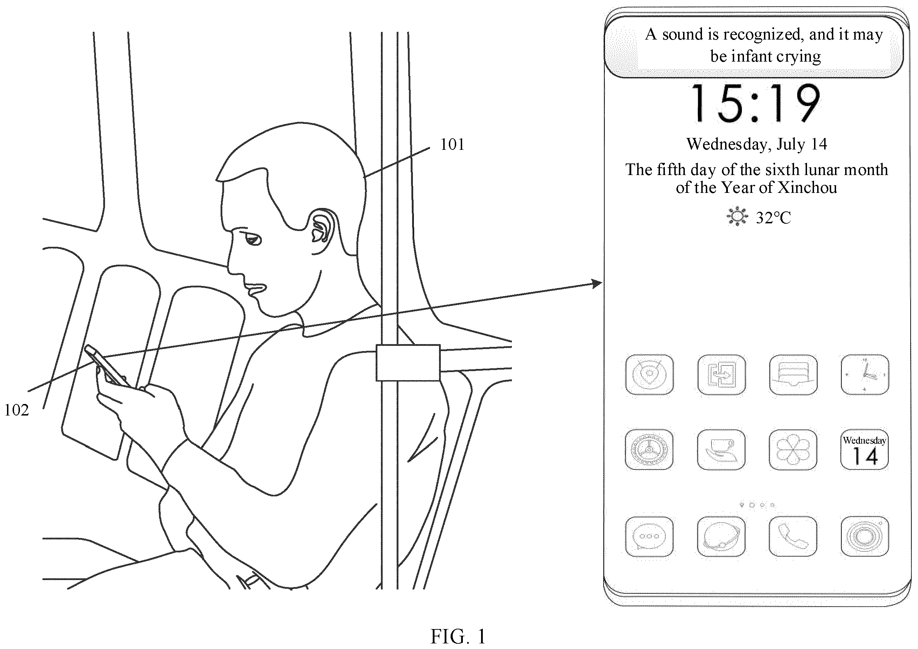

FIG. 1 is a diagram of a scenario for sound event detection. As shown in FIG. 1, a user 101 is taking the subway and holds a mobile phone 102. The mobile phone 102 has a function of sound event detection, which can be provided to the user as a "voice recognition" function as an auxiliary function. The user 101 has turned on the "sound recognition" function, and can detect various sounds such as alarms, animal calls, doorbells, door knocking sounds, infant crying, and shouting.

In the scenario shown in FIG. 1, the mobile phone 102 detects the sound of infant crying, and reminds the user 101 in the manner of a message notification. The notification message may be displayed as "A sound is recognized, and it may be infant crying".

Optionally, when displaying the notification message, the mobile phone 102 may also remind the user 101 by vibrating or ringing, which is not limited in this embodiment of this application.

The foregoing process of performing sound event detection by the mobile phone 102 may be as follows: acquiring an audio signal, and inputting the audio signal into a sound event recognition model, to obtain a sound event corresponding to the audio signal as infant crying.

There are a plurality of sound event recognition models, and each sound event recognition model corresponds to one sound event. When recognizing the sound event corresponding to the audio signal, the mobile phone 102 needs to input the audio signal into each sound event recognition model for recognition. The accuracy of the sound event detection is relatively low, the amount of calculation is relatively large, and the power consumption of the mobile phone 102 will be increased, resulting in reduced sound event detection efficiency.

In view of this, the embodiments of this application provide an audio recognition method and an audio recognition apparatus, which can improve the accuracy of sound event detection and reduce the amount of calculation.

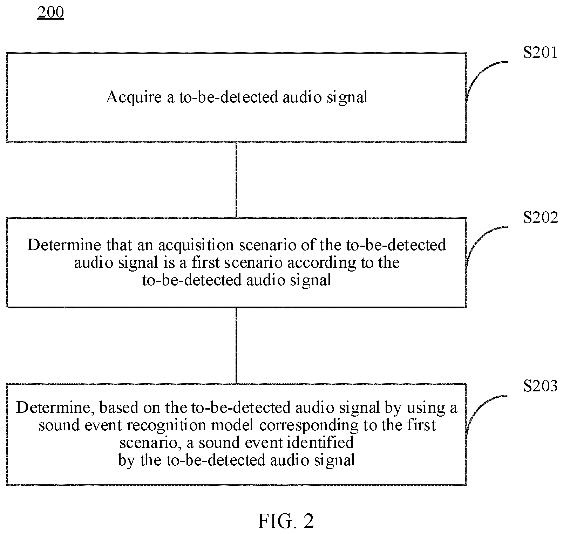

FIG. 2 is a schematic diagram of an audio recognition method 200 according to an embodiment of this application. The method may be performed by an audio recognition device, for example, a terminal device. The terminal device may be a wearable device, for example, a mobile phone, a tablet computer, a personal computer (personal computer, PC), or a smartwatch, or may be various teaching aids (such as a learning machine and an early education machine), a smart toy, a portable robot, a personal digital assistant (personal digital assistant, PDA), an augmented reality (augmented reality, AR) device, and a virtual reality (virtual reality, VR) device, or the like. The method 200 may be applied to any scenario for sound event detection, for example, the scenario shown in FIG. 1, which is not limited in this embodiment of this application.

As shown in FIG. 2, the method 200 may include the following steps.

S201: Acquire a to-be-detected audio signal.

The to-be-detected audio signal may be understood as any audio signal used for detecting a sound event, which is not limited in this embodiment of this application. The to-be-detected audio signal may also be referred to as a to-be-detected sound signal or a to-be-detected acoustic signal or audio stream, which is not limited in this embodiment of this application.

There may be a plurality of possible implementations for an audio recognition device to acquire the to-be-detected audio signal.

In a possible implementation, the audio recognition device may acquire the to-be-detected audio signal in real time.

In this implementation, the to-be-detected audio signal may be any audio signal in the scenario in which the audio recognition device is located.

For example, the audio recognition device is a mobile phone, and the mobile phone is in an office. The mobile phone may acquire any audio signal occurring in the office in real time, for example, a ringtone and a keystroke sound.

In this implementation, the audio recognition device acquires the to-be-detected audio signal in real time, and may perform sound event detection on the scenario in which the audio recognition device is located, thereby helping to improve the user experience.

In another possible implementation, the audio recognition device may receive an audio signal from another device, to obtain the to-be-detected audio signal.

The another device refers to any device other than the audio recognition device that has the function of acquiring audio signals.

The another device may acquire an audio signal in the scenario in which the another device is located in real time, and send the audio signal to the audio recognition device. After receiving the audio signal, the audio recognition device uses the audio signal as the to-be-detected audio signal for sound event detection. In this case, the another device is in the same scenario as the audio recognition device.

The another device may alternatively send an acquired historical audio signal in the scenario in which the another device is located to the audio recognition device. After receiving the historical audio signal, the audio recognition device uses the historical audio signal as the to-be-detected audio signal for sound event detection. In this case, the another device may be in the same scenario as the audio recognition device, or may not be in the same scenario as the audio recognition device, which is not limited in this embodiment of this application.

The historical audio signal may be understood as: an audio signal that does not appear at the current time and appeared before the current time.

In this implementation, the audio recognition device may only have the function of detecting sound events, and may not include the function of acquiring audio signals, to reduce the requirements for the audio recognition device, so that the function is simple and the costs is relatively low.

In still another possible implementation, the audio recognition device may use an acquired historical audio signal as the to-be-detected audio signal.

The audio recognition device may use a stored historical audio signal as the to-be-detected audio signal for sound event detection.

In this implementation, the audio recognition device does not need to acquire an audio signal in real time, which can reduce power consumption of the audio recognition device.

S202: Determine that an acquisition scenario of the to-be-detected audio signal is a first scenario according to the to-be-detected audio signal.

The first scenario may be a scenario in which the to-be-detected audio signal is acquired. The first scenario may be, for example, a road, a subway, a home, or an office.

For example, in a case that the first scenario is the road, the to-be-detected audio signal may be an audio signal of a whistle, an audio signal of an alarm, an audio signal of a crash, or an audio signal of car passing. In a case that the first scenario is the subway, the to-be-detected audio signal may be an audio signal of train passing, an audio signal of a compartment crash, or the like. In a case that the first scenario is the home, the to-be-detected audio signal may be an audio signal of a vacuum cleaning sound of a vacuum cleaner, an audio signal of a washing sound of a washing machine, an audio signal of a dish collision sound, a signal of infant crying, a signal of faucet dripping, or the like. Ina case that the first scenario is the office, the to-be-detected audio signal may be an audio signal of a ringtone, an audio signal of a keystroke sound, an audio signal of a meeting invitation sound, or the like.

According to the to-be-detected audio signal, the method for determining the acquisition scenario of the to-be-detected audio signal may be referred to as a "scenario detection algorithm", and may also be referred to as "sound scenario recognition" or "acoustic scenario recognition", which is not limited in this embodiment of this application.

The existing scenario detection algorithm has relatively high accuracy. In this embodiment of this application, the existing scenario detection algorithm may be used to determine that the acquisition scenario of the to-be-detected audio signal is the first scenario according to the to-be-detected audio signal, and after preliminary classification is performed on the to-be-detected audio signal based on the first scenario, sound event detection is performed.

The preliminary classification may also be referred to as pre-classification or primary classification, which is not limited in this embodiment of this application.

S203: Determine, based on the to-be-detected audio signal by using a sound event recognition model corresponding to the first scenario, a sound event identified by the to-be-detected audio signal, where the sound event recognition model corresponding to the first scenario is a neural network model trained by using an audio signal in the first scenario and configured to identify a sound event in the first scenario based on the audio signal.

The sound event recognition model corresponding to the first scenario is trained by using an audio signal in the first scenario. The audio signal in the first scenario is any one or more audio signals that may appear in the first scenario. The sound event recognition model may also be referred to as an audio recognition model, which is not limited in this embodiment of this application.

When there is one audio signal in the first scenario, the one audio signal corresponds to one sound event, and one sound event recognition model can be trained according to the one audio signal. That is, the audio signal, the sound event, and the sound event recognition model are in a one-to-one correspondence. The trained sound event recognition model can be configured to determine, based on the to-be-detected audio signal, whether the sound event corresponding to the to-be-detected audio signal is a sound event corresponding to the sound event recognition model or not.

When there are a plurality of audio signals in the first scenario, each of the plurality of audio signals corresponds to one sound event, and a plurality of sound event recognition models can be trained according to the plurality of audio signals. That is, the audio signals, the sound events, and the sound event recognition models are in a one-to-one correspondence. Each of the plurality of trained sound event recognition models can be configured to determine, based on the to-be-detected audio signal, whether the sound event corresponding to the to-be-detected audio signal is a sound event corresponding to the sound event recognition model or not.

According to the audio recognition method provided in this embodiment of this application, preliminary classification is first performed on a to-be-detected audio signal according to a scenario detection algorithm, to determine that an acquisition scenario of the to-be-detected audio signal is a first scenario, and then sound event detection is performed on the to-be-detected audio signal by using a sound event recognition model corresponding to the first scenario. In this way, compared with directly using a sound event recognition model corresponding to different scenarios to perform sound event detection on the to-be-detected audio signal, the amount of calculation can be reduced, the interference of sound events in different scenarios can be reduced, and the sound event corresponding to the to-be-detected audio signal can be more accurately recognized, thereby improving the accuracy of sound event detection. In addition, if the audio recognition method provided in this embodiment of this application is performed by a terminal device, reducing the amount of calculation can reduce the power consumption of the terminal device, thereby further improving the efficiency of sound event detection.

The to-be-detected audio signal includes a plurality of audio frames; and the determining that an acquisition scenario of the to-be-detected audio signal is a first scenario according to the to-be-detected audio signal in S202 includes: inputting each of the plurality of audio frames into a scenario recognition model, to obtain scenario information of each audio frame, where the scenario recognition model is a neural network model trained by using audio frames in a plurality of scenarios and configured to determine an acquisition scenario of an audio frame based on the audio frame, and the scenario information of each audio frame is used for indicating a probability that an acquisition scenario of each audio frame is each of the plurality of scenarios; and determining that the acquisition scenario of the to-be-detected audio signal is the first scenario in the plurality of scenarios according to the scenario information of each audio frame.

The scenario recognition model is trained by using audio frames in a plurality of scenarios. The plurality of scenarios is not limited in this embodiment of this application. In addition, the scenario recognition model may also be referred to as a scenario classification model or a scenario classifier, and the name is not limited in this embodiment of this application.

For example, the scenario recognition model may be trained based on audio frames in at least one of a road scenario, a subway scenario, a furniture scenario, or an office scenario.

The scenario recognition model may determine an acquisition scenario of an audio frame based on the audio frame. For example, the scenario recognition model may determine, according to an audio frame in the to-be-detected audio signal, which one of the plurality of scenarios the audio frame belongs to.

After acquiring the to-be-detected audio signal, the audio recognition device may divide the to-be-detected audio signal into a plurality of audio frames, and input each of the plurality of audio frames into the scenario recognition model, to obtain the scenario information of each audio frame. The scenario information of each audio frame is used for representing the probability that the acquisition scenario of each audio frame is each of the plurality of scenarios. The audio recognition device may determine that the acquisition scenario of the to-be-detected audio signal is the first scenario in the plurality of scenarios according to the scenario information of each audio frame.

It should be understood that, a sum of the probabilities that each audio frame belongs to each of the plurality of scenarios is 1.

For example, the to-be-detected audio signal may include five audio frames, which are an audio frame 1, an audio frame 2, an audio frame 3, an audio frame 4, and an audio frame 5 respectively. The audio recognition device may respectively input the audio frame 1, the audio frame 2, the audio frame 3, the audio frame 4, and the audio frame 5 into the scenario recognition model, to obtain scenario information of the audio frame 1, scenario information of the audio frame 2, and scenario information of the audio frame 3, scenario information of the audio frame 4, and scenario information of the audio frame 5. If the scenario recognition model is trained based on audio frames in a road scenario, a subway scenario, a furniture scenario, and an office scenario, the scenario information of the audio frame 1 may include a probability that the acquisition scenario of the audio frame 1 is the road scenario, a probability that the acquisition scenario of the audio frame 1 is the subway scenario, a probability that the acquisition scenario of the audio frame 1 is the furniture scenario, and a probability that the acquisition scenario of the audio frame 1 is the furniture scenario. The scenario information of other audio frames is the same, and details are not described herein again. The audio recognition device may determine the acquisition scenario of the to-be-detected audio signal according to the scenario information of the audio frame 1, the scenario information of the audio frame 2, the scenario information of the audio frame 3, the scenario information of the audio frame 4, and the scenario information of the audio frame 5.

Optionally, the determining that the acquisition scenario of the to-be-detected audio signal is the first scenario in the plurality of scenarios according to the scenario information of each audio frame may include: collecting statistics on a quantity of audio frames belonging to each of the plurality of scenarios in the plurality of audio frames; and determining the first scenario as the acquisition scenario of the to-be-detected audio signal when a quantity of audio frames belonging to the first scenario in the plurality of scenarios in the plurality of audio frames meets a first preset condition and a probability indicated by scenario information corresponding to the audio frames belonging to the first scenario in the plurality of audio frames meets a second preset condition.

The first preset condition and the first preset condition may be adjusted according to an actual application scenario, which is not limited in this embodiment of this application.

For example, if the quantity of the plurality of audio frames is N, the first preset condition may be greater than or equal to N/2. The second preset condition may be greater than or equal to 70% or 0.7. In the above example, the to-be-detected audio signal includes five audio frames, which are the audio frame 1, the audio frame 2, the audio frame 3, the audio frame 4, and the audio frame 5 respectively. If a probability that the scenario information corresponding to three audio frames in the five audio frames indicates being in the first scenario is greater than or equal to 0.7, the audio recognition device may determine that the acquisition scenario of the to-be-detected audio signal is the first scenario.

According to the audio recognition method provided in this embodiment of this application, it is determined based on the scenario recognition model that the acquisition scenario of the to-be-detected audio signal is the first scenario. The accuracy of the scenario recognized by using this method is relatively high, so that the sound event corresponding to the to-be-detected audio signal can be more accurately recognized, thereby improving the accuracy of sound event detection.

Optionally, after dividing the to-be-detected audio signal into a plurality of audio frames, the audio recognition device may extract first acoustic features of the plurality of audio frames, and convert the audio signal from the time domain to the transform domain for representation. For example, the first acoustic features of the plurality of audio frames may be long short-term wavelet features, which can take both long-term background information and short-term transient information into account, thereby helping to improve the accuracy of scenario recognition.

The scenario recognition model may generally be a neural network model based on a deep convolutional neural network (deep convolutional neural networks, DCNN) architecture, which may be trained by using first acoustic features corresponding to audio frames in a plurality of scenarios.

It should be understood that, the scenario recognition model is trained in advance, can recognize a plurality of scenarios, and is preset in the audio recognition device.

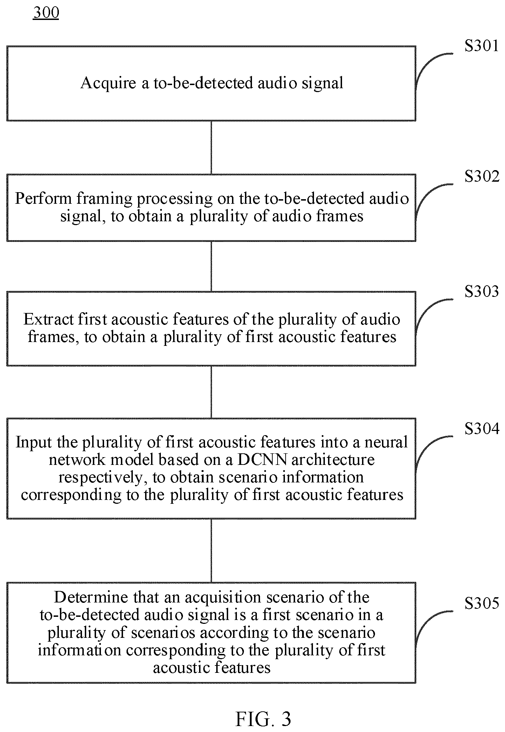

For example, FIG. 3 is a schematic flowchart of a scenario recognition method 300. As shown in FIG. 3, the method 300 may include the following steps.

S301: Acquire a to-be-detected audio signal.

For specific implementation of this step, reference may be made to S201. Details are not described herein again.

S302: Perform framing processing on the to-be-detected audio signal, to obtain a plurality of audio frames.

The audio recognition device may use an existing audio signal framing method to perform framing processing on the to-be-detected audio signal. Details are not described herein again.

S303: Extract first acoustic features of the plurality of audio frames, to obtain a plurality of first acoustic features, where the first acoustic features are in a one-to-one correspondence with the audio frames.

The first acoustic features may be long short-term wavelet features.

S304: Input the plurality of first acoustic features into a neural network model based on a DCNN architecture respectively, or sequentially input the plurality of first acoustic features into the neural network model based on the DCNN architecture, which is not limited in this embodiment of this application.

The audio recognition device may input the plurality of first acoustic features into the neural network model based on the DCNN architecture respectively, to obtain output results, and use a logistic regression model (softmax) to normalize the output results, to obtain scenario information corresponding to the plurality of first acoustic features.

S305: Determine an acquisition scenario of the to-be-detected audio signal according to the scenario information corresponding to the plurality of first acoustic features.

In the method for the audio recognition device to determine the acquisition scenario of the to-be-detected audio signal, the first preset condition and the second preset condition may be used, and determining is performed according to the foregoing method. Details are not described herein again.

According to the audio recognition method provided in this embodiment of this application, the first acoustic features of the to-be-detected audio signal are first extracted, and then the acquisition scenario of the to-be-detected audio signal is determined based on the scenario recognition model. Characteristics of the to-be-detected audio signal can be better reflected based on the first acoustic features, and the accuracy of recognition of the first scenario can be improved.

In an optional embodiment, the to-be-detected audio signal includes a plurality of audio frames, the sound event recognition model corresponding to the first scenario includes at least one sound event recognition model, the at least one sound event recognition model includes a first sound event recognition model, and the first sound event recognition model is trained by using an audio frame identifying a first sound event in the first scenario; and the determining, based on the to-be-detected audio signal by using a sound event recognition model corresponding to the first scenario, a sound event identified by the to-be-detected audio signal in S203 includes: inputting the plurality of audio frames into the first sound event recognition model respectively, to obtain sound event information identified by the plurality of audio frames, where sound event information of each audio frame in the sound event information of the plurality of audio frames is used for indicating a probability that the each audio frame identifies the first sound event; and determining, when sound event information identified by a first audio frame in the plurality of audio frames meets a third preset condition, the first sound event as the sound event identified by the to-be-detected audio signal.

The sound event recognition model may also be referred to as an event detection network model, which is not limited in this embodiment of this application.

Generally, a commonly used sound event recognition model is a neural network model based on a convolutional recurrent neural network (convolutional recurrent neural network, CRNN) architecture, which is not limited in this embodiment of this application.

The first sound event recognition model may be any one of the at least one sound event recognition model, which is not limited in this embodiment of this application. It should be understood that, the first sound event recognition model is trained in advance, can recognize the first sound event, and is preset in the audio recognition device.

The third preset condition may be adjusted according to an actual application scenario, which is not limited in this embodiment of this application.

The audio recognition device may input the plurality of audio frames into the first sound event recognition model respectively, to obtain sound event information identified by the plurality of audio frames, and determine, when sound event information identified by a first audio frame in the plurality of audio frames meets a third preset condition, the first sound event as the sound event identified by the to-be-detected audio signal.

For example, if the to-be-detected audio signal includes five audio frames, which are an audio frame 1, an audio frame 2, an audio frame 3, an audio frame 4, and an audio frame 5 respectively, the audio recognition device may respectively input the audio frame 1, the audio frame 2, the audio frame 3, the audio frame 4, and the audio frame 5 into the first sound event recognition model, to obtain a probability that the audio frame 1 identifies the first sound event, a probability that the audio frame 2 identifies the first sound event, a probability that the audio frame 3 identifies the first sound event, a probability that the audio frame 4 identifies the first sound event, and a probability that the audio frame 5 identifies the first sound event. If the third preset condition is greater than or equal to 80% or 0.8, and a probability that one audio frame in the five audio frames identifies the first sound event is greater than or equal to 0.8, the audio recognition device can determine that the sound event identified by the to-be-detected audio signal is the first sound event.

Optionally, the sound event information identified by the first audio frame meets the third preset condition, and sound event information identified by a second audio frame in a preset quantity of audio frames previous to the first audio frame meets a fourth preset condition, then a time point corresponding to the second audio frame is a start time point of the first sound event.

The preset quantity of frames may be an integer greater than 0, for example, 50 frames, and the specific value of the preset quantity of frames is not limited in this embodiment of this application. Different sound events may correspond to different preset quantities of frames, which is not limited in this embodiment of this application.

The fourth preset condition may be adjusted according to an actual application scenario, which is not limited in this embodiment of this application. For example, the fourth preset condition may be greater than or equal to 50% or 0.5.

For example, the sound event information identified by the first audio frame meets the third preset condition, and the first audio frame is the 200^{th} frame in the plurality of audio frames, the audio recognition device may push the 200^{th} frame forward by 50 frames, that is, sound event information identified by a second audio frame in the 150^{th} frame to the 200^{th} frame meets a fourth preset condition, then a time point corresponding to the second audio frame is a start time point of the first sound event.

After the audio recognition device determines the start time point of the first sound event, the start time point may be used for display or notifying the user, and may alternatively be used in conjunction with other applications, which is not limited in this embodiment of this application.

According to the audio recognition method provided in this embodiment of this application, the sound event corresponding to the to-be-detected audio signal is determined based on the sound event recognition model. The accuracy of the sound event recognized by using this method is relatively high, thereby improving the accuracy of sound event detection.

Optionally, after dividing the to-be-detected audio signal into a plurality of audio frames, the audio recognition device may extract second acoustic features of the plurality of audio frames, for example, mel frequency cepstrum coefficients (mel frequency cepstrum coefficient, MFCC), or logarithmic spectrum features, and input the second acoustic features of the plurality of audio frames into the first sound event recognition model for sound event detection. The mel frequency cepstrum coefficients take the human auditory curve into consideration, compresses the high-frequency part, and pays more attention to the low-frequency components in the to-be-detected audio signal, which can make the sound event detection results more accurate.

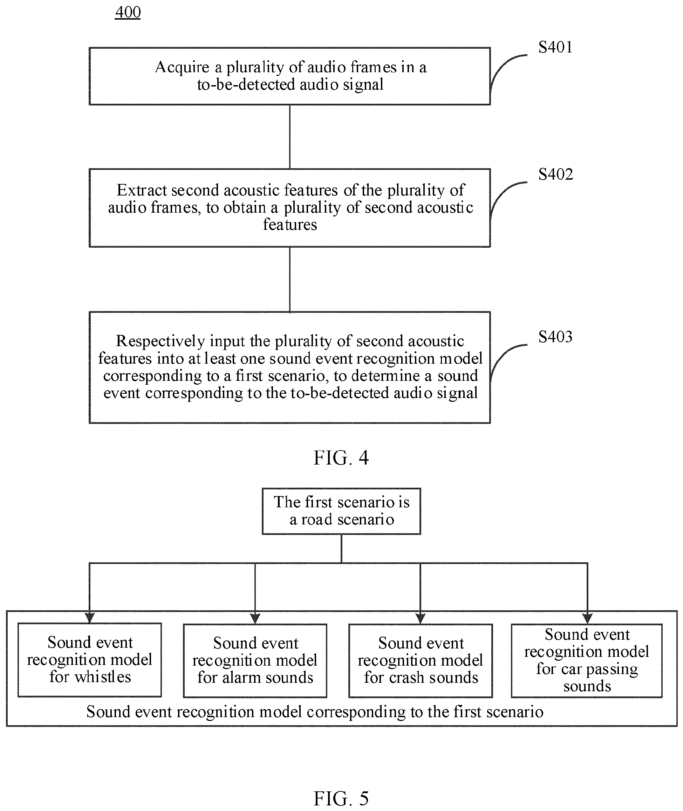

For example, FIG. 4 is a schematic flowchart of a sound event recognition method 400. As shown in FIG. 4, the method 400 may include the following steps.

S401: Acquire a plurality of audio frames in a to-be-detected audio signal.

The audio recognition device may first acquire the to-be-detected audio device, and perform framing processing on the to-be-detected audio signal to obtain a plurality of audio frames. For details, reference may be made to S302. Details are not described herein again.

S402: Extract second acoustic features of the plurality of audio frames, to obtain a plurality of second acoustic features, where the second acoustic features are in a one-to-one correspondence with the audio frames.

It is to be noted that, the second acoustic feature is different from the first acoustic feature in S303. The first acoustic feature is used for recognizing the acquisition scenario of the audio frame, and the second acoustic feature herein is used for recognizing the sound event of the audio frame.

S403: Respectively input the plurality of second acoustic features into at least one sound event recognition model corresponding to a first scenario, to determine a sound event corresponding to the to-be-detected audio signal.

For example, the at least one sound event recognition model corresponding to the first scenario may include three sound event recognition models, and the three sound event recognition models may be a sound event recognition model 1, a sound event recognition model 2, and a sound event recognition model 3 respectively. The audio recognition device may input the plurality of second acoustic features into the sound event recognition model 1, the sound event recognition model 2, and the sound event recognition model 3 respectively, and determine that the sound event corresponding to the to-be-detected audio signal is the sound event corresponding to the sound event recognition model 1, the sound event corresponding to the sound event recognition model 2, or the sound event corresponding to the sound event recognition model 3. For a specific determining manner, reference may be made to the foregoing method of the third preset condition, and details are not described herein again.

According to the audio recognition method provided in this embodiment of this application, the second acoustic features of the to-be-detected audio signal are first extracted, and then the sound event corresponding to the to-be-detected audio signal is determined based on the sound event recognition model. Characteristics of the to-be-detected audio signal can be better reflected based on the second acoustic features, and the accuracy of sound event detection can be improved.

In an optional embodiment, the first scenario may be a road scenario, and audio signals that may appear in the first scenario may include at least one of an audio signal of a whistle, an audio signal of an alarm, an audio signal of a crash, or an audio signal of car passing. Correspondingly, the sound event recognition model corresponding to the first scenario may include at least one of the following: a sound event recognition model for whistles, a sound event recognition model for alarm sounds, a sound event recognition model for crash sounds, or a sound event recognition model for car passing sounds.

The sound event recognition model for whistles is configured to recognize whether the sound event of the audio signal is a whistle or not based on the audio signal; the sound event recognition model for alarm sounds is configured to recognize whether the sound event of the audio signal is an alarm sound or not based on the audio signal; the sound event recognition model for crash sounds is configured to recognize whether the sound event of the audio signal is a crash sound or not based on the audio signal, and the sound event recognition model for car passing sounds is configured to recognize whether the sound event of the audio signal is a car passing sound or not based on the audio signal.

For example, FIG. 5 is a schematic block diagram of a sound event recognition model corresponding to a first scenario. As shown in FIG. 5, the first scenario may be the road scenario, and the sound event recognition model corresponding to the first scenario includes: four sound event recognition models in total: a sound event recognition model for whistles, a sound event recognition model for alarm sounds, a sound event recognition model for crash sounds, and a sound event recognition model for car passing sounds. The audio recognition device may respectively input the to-be-detected audio signal into the four sound event recognition models, to determine the sound event corresponding to the to-be-detected audio signal being which sound event corresponding to the four sound event recognition models.

In an optional embodiment, the first scenario may be the subway scenario, and the audio signal that may appear in the first scenario may include at least one of a train passing sound, a compartment crash sound, or a subway station announcement sound. Correspondingly, the sound event recognition model corresponding to the first scenario includes at least one of the following: a sound event recognition model for train passing sounds, a sound event recognition model for compartment crash sounds, or a sound event recognition model for subway station announcement sounds.

The sound event recognition model for train passing sounds is configured to recognize whether the sound event of the audio signal is a train passing sound or not based on the audio signal; the sound event recognition model for compartment crash sounds is configured to recognize whether the sound event of the audio signal is a compartment crash sound or not based on the audio signal; and the sound event recognition model for subway station announcement sounds is configured to recognize whether the sound event of the audio signal is a subway station announcement sound or not based on the audio signal.

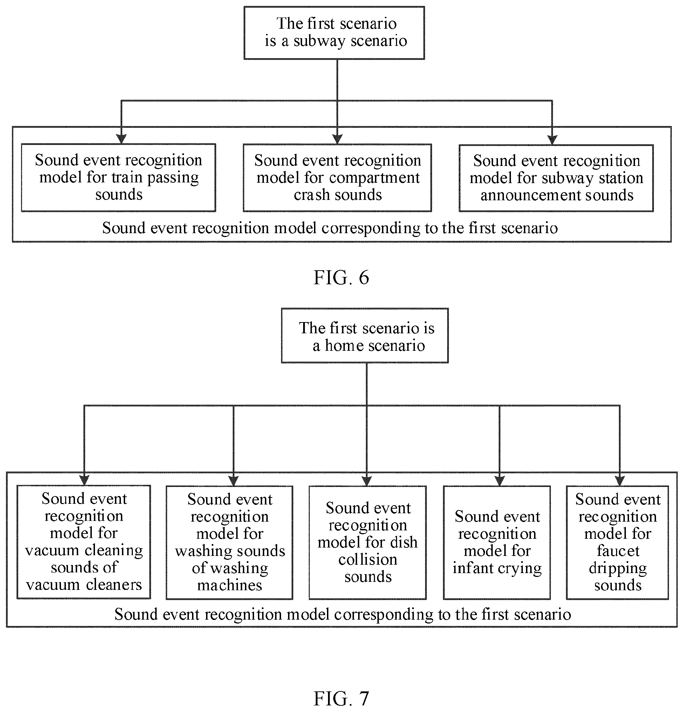

For example, FIG. 6 is a schematic block diagram of a sound event recognition model corresponding to a first scenario. As shown in FIG. 3, the first scenario may be the subway scenario, and the sound event recognition model corresponding to the first scenario includes: three sound event recognition models in total: a sound event recognition model for train passing sounds, a sound event recognition model for compartment crash sounds, and a sound event recognition model for subway station announcement sounds. The audio recognition device may respectively input the to-be-detected audio signal into the three sound event recognition models, to determine the sound event corresponding to the to-be-detected audio signal being which sound event corresponding to the three sound event recognition models.

In an optional embodiment, the first scenario may be the home scenario, and audio signals that may appear in the first scenario may include at least one of a vacuum cleaning sound of a vacuum cleaner, a washing sound of a washing machine, a dish collision sound, an infant crying sound, or a faucet dripping sound. Correspondingly, the sound event recognition model corresponding to the first scenario includes at least one of the following: a sound event recognition model for vacuum cleaning sounds of vacuum cleaners, a sound event recognition model for washing sounds of washing machines, a sound event recognition model for dish collision sounds, a sound event recognition model for infant crying, or a sound event recognition model for faucet dripping sounds.

For example, FIG. 7 is a schematic block diagram of a sound event recognition model corresponding to a first scenario. As shown in FIG. 4, the first scenario may be the home scenario, and the sound event recognition model corresponding to the first scenario includes: five sound event recognition models in total: a sound event recognition model for vacuum cleaning sounds of vacuum cleaners, a sound event recognition model for washing sounds of washing machines, a sound event recognition model for dish collision sounds, a sound event recognition model for infant crying, and a sound event recognition model for faucet dripping sounds. The audio recognition device may respectively input the to-be-detected audio signal into the five sound event recognition models, to determine the sound event corresponding to the to-be-detected audio signal being which sound event corresponding to the five sound event recognition models.

Optionally, the sound event recognition model corresponding to the first scenario may further include at least one of a sound event recognition model for broken glass sounds or a sound event recognition model for door knocking sounds.

In an optional embodiment, the first scenario may be the office scenario, and audio signals that may appear in the first scenario may include at least one of a ringtone, a keystroke sound, or a meeting invitation sound. Correspondingly, the sound event recognition model corresponding to the first scenario includes at least one of the following: a sound event recognition model for ringtones, a sound event recognition model for keystroke sounds, or a sound event recognition model for meeting invitation sounds.

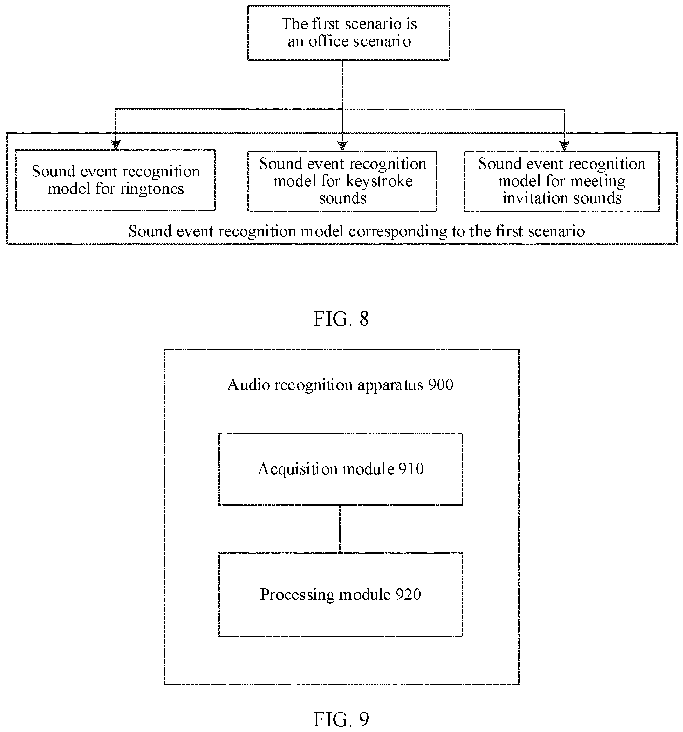

For example, FIG. 8 is a schematic block diagram of a sound event recognition model corresponding to a first scenario. As shown in FIG. 5, the first scenario may be the office scenario, and the sound event recognition model corresponding to the first scenario includes: three sound event recognition models in total: a sound event recognition model for ringtones, a sound event recognition model for keystroke sounds, and a sound event recognition model for meeting invitation sounds. The audio recognition device may respectively input the to-be-detected audio signal into the three sound event recognition models, to determine the sound event corresponding to the to-be-detected audio signal being which sound event corresponding to the three sound event recognition models.

Optionally, the first scenario may be a park scenario, and the sound event recognition model corresponding to the first scenario may include at least one of the following: at least one of a sound event recognition model for dog barking, a sound event recognition model for cat meowing, or a sound event recognition model for broadcasting sounds.

It is to be noted that, the foregoing examples of the first scenario are only possible implementations, which is not limited in this embodiment of this application.

Sequence numbers of the foregoing processes do not mean execution sequences. The execution sequences of the processes should be determined based on functions and internal logic of the processes, and should not be construed as any limitation on the implementation processes of embodiments of this application.

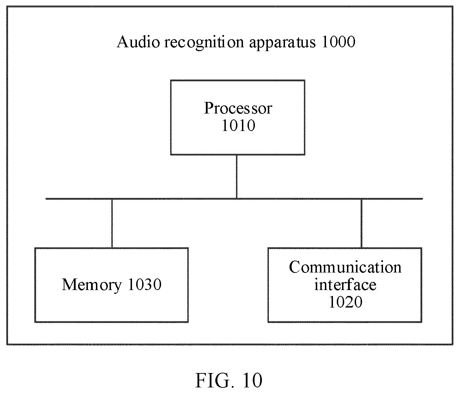

The foregoing describes in detail the audio recognition method provided in the embodiments of this application with reference to FIG. 1 to FIG. 8. The following describes in detail the audio recognition apparatus provided in the embodiments of this application with reference to FIG. 9 and FIG. 10.

FIG. 9 shows an audio recognition apparatus 900 according to an embodiment of this application. The audio recognition apparatus 900 includes an acquisition module 910 and a processing module 920. The acquisition module 910 is configured to: acquire a to-be-detected audio signal; and the processing module 920 is configured to: determine that an acquisition scenario of the to-be-detected audio signal is a first scenario according to the to-be-detected audio signal; and determine, based on the to-be-detected audio signal by using a sound event recognition model corresponding to the first scenario, a sound event identified by the to-be-detected audio signal, where the sound event recognition model corresponding to the first scenario is a neural network model trained by using an audio signal in the first scenario and configured to identify a sound event in the first scenario based on the audio signal.

Optionally, the to-be-detected audio signal includes a plurality of audio frames; and the processing module 920 is further configured to: input each of the plurality of audio frames into a scenario recognition model, to obtain scenario information of each audio frame, where the scenario recognition model is a neural network model trained by using audio frames in a plurality of scenarios and configured to determine an acquisition scenario of an audio frame based on the audio frame, and the scenario information of each audio frame is used for indicating a probability that an acquisition scenario of each audio frame is each of the plurality of scenarios; and determine that the acquisition scenario of the to-be-detected audio signal is the first scenario in the plurality of scenarios according to the scenario information of each audio frame.

Optionally, the processing module 920 is further configured to: collect statistics on a quantity of audio frames belonging to each of the plurality of scenarios in the plurality of audio frames; and determine the first scenario as the acquisition scenario of the to-be-detected audio signal when a quantity of audio frames belonging to the first scenario in the plurality of scenarios in the plurality of audio frames meets a first preset condition and a probability indicated by scenario information corresponding to the audio frames belonging to the first scenario in the plurality of audio frames meets a second preset condition.

Optionally, the scenario recognition model is trained based on audio frames in at least one of a road scenario, a subway scenario, a home scenario, or an office scenario.

Optionally, the to-be-detected audio signal includes a plurality of audio frames, the sound event recognition model corresponding to the first scenario includes at least one sound event recognition model, the at least one sound event recognition model includes a first sound event recognition model, and the first sound event recognition model is trained by using an audio frame identifying a first sound event in the first scenario; and the processing module 920 is further configured to: input the plurality of audio frames into the first sound event recognition model respectively, to obtain sound event information identified by the plurality of audio frames, where sound event information of each audio frame in the sound event information of the plurality of audio frames is used for indicating a probability that the each audio frame identifies the first sound event; and determine, when sound event information identified by a first audio frame in the plurality of audio frames meets a third preset condition, the first sound event as the sound event identified by the to-be-detected audio signal.

Optionally, the sound event information identified by the first audio frame meets the third preset condition, and sound event information identified by a second audio frame in a preset quantity of frames previous to the first audio frame meets a fourth preset condition, then a time point corresponding to the second audio frame is a start time point of the first sound event.

Optionally, the first scenario is the road scenario, and the sound event recognition model corresponding to the first scenario includes at least one of the following: a sound event recognition model for whistles, a sound event recognition model for alarm sounds, a sound event recognition model for crash sounds, or a sound event recognition model for car passing sounds.

Optionally, the first scenario is the subway scenario, and the sound event recognition model corresponding to the first scenario includes at least one of the following: a sound event recognition model for train passing sounds, a sound event recognition model for compartment crash sounds, or a sound event recognition model for subway station announcement sounds.

Optionally, the first scenario is the home scenario, and the sound event recognition model corresponding to the first scenario includes at least one of the following: a sound event recognition model for vacuum cleaning sounds of vacuum cleaners, a sound event recognition model for washing sounds of washing machines, a sound event recognition model for dish collision sounds, a sound event recognition model for infant crying, or a sound event recognition model for faucet dripping sounds.

Optionally, the first scenario is the office scenario, and the sound event recognition model corresponding to the first scenario includes at least one of the following: a sound event recognition model for ringtones, a sound event recognition model for keystroke sounds, or a sound event recognition model for meeting invitation sounds.

It should be understood that, the audio recognition apparatus 900 herein is embodied in a form of functional modules. The term "module" herein may be an application-specific integrated circuit (application-specific integrated circuit, ASIC), an electronic circuit, a processor (for example, a shared processor, a dedicated processor, or a set of processors) and a memory that execute one or more software programs or firmware programs, a combinational logic circuit, and/or other suitable components that support the described functions. In an optional example, a person skilled in the art may understand that the audio recognition apparatus 900 may be specifically the audio recognition device in the foregoing method embodiments, or the functions of the audio recognition device in the foregoing method embodiments may be integrated into the audio recognition apparatus 900, and the audio recognition apparatus 900 may be configured to execute each procedure and/or step corresponding to the audio recognition device in the foregoing method embodiments. To avoid repetition, details are not described herein again.

The audio recognition apparatus 900 has functions of implementing corresponding steps performed by the audio recognition device in the foregoing method embodiments. The functions may be implemented by hardware, or may be implemented by hardware executing corresponding software. The hardware or software includes one or more modules corresponding to the functions.

In this embodiment of this application, the audio recognition apparatus 900 in FIG. 9 may alternatively be a chip or a chip system, for example, a system on chip (system on chip, SoC).

FIG. 10 is another schematic block diagram of an audio recognition apparatus 1000 according to an embodiment of this application. The audio recognition apparatus 1000 includes: a processor 1010, a communication interface 1020, and a memory 1030. The processor 1010, the communication interface 1020, and the memory 1030 communicate with each other through an internal connection path. The memory 1030 is configured to store instructions. The processor 1010 is configured to execute the instructions stored in the memory 1030, so as to control the communication interface 1020 to send a signal and/or receive a signal.

It should be understood that, the audio recognition apparatus 1000 may be specifically the audio recognition device in the foregoing method embodiments, or the functions of the audio recognition device in the foregoing method embodiments may be integrated into the audio recognition apparatus 1000, and the audio recognition apparatus 1000 may be configured to execute each step and/or procedure corresponding to the audio recognition device in the foregoing method embodiments. Optionally, the memory 1030 may include a read-only memory and a random access memory, and provides instructions and data to the processor. A part of the memory may further include a non-volatile random access memory. For example, the memory may further store information about a device type. The processor 1010 may be configured to execute the instructions stored in the memory. Further, when the processor executes the instructions, the processor may perform steps and/or processes corresponding to the audio recognition device in the method embodiments.

It should be understood that, in this embodiment of this application, the processor 1010 may be a central processing unit (central Processing Unit, CPU), or the processor may be another general-purpose processor, a digital signal processor (DSP), an application-specific integrated circuit (ASIC), a field-programmable gate array (FPGA) or other programmable logic devices, a discrete gate or transistor logic device, a discrete hardware component, or the like. The general-purpose processor may be a microprocessor, or the processor may be any conventional processor and the like.

During implementation, the steps of the method may be performed by using an integrated logic circuit of hardware in the processor or by using instructions in a form of software. Steps of the methods disclosed with reference to the embodiments of this application may be directly performed and completed by using a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor executes the instructions in the memory and completes the steps of the foregoing method in combination with hardware of the processor. To avoid repetition, details are not described herein again.

This application further provides a computer-readable storage medium. The computer-readable storage medium is used to store a computer program, and the computer program is used to implement the method corresponding to the audio recognition device in the method embodiments.

This application further provides a chip system, and the chip system is configured to support the audio recognition device in the method embodiments in implementing the functions shown in the embodiments of this application.

This application further provides a computer program product, and the computer program product includes a computer program (which may also be referred to as code or instructions). When the computer program runs on a computer, the computer may perform the method corresponding to the audio recognition device shown in the foregoing method embodiments.

A person of ordinary skill in the art may notice that the exemplary units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but it is not to be considered that the implementation goes beyond the scope of this application.

A person skilled in the art may clearly understand that, for simple and clear description, for specific work processes of the foregoing described system, apparatus, and unit, reference may be made to corresponding processes in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units may be integrated into one unit.

When the functions are implemented in the form of a software functional unit and sold or used as an independent product, the functions may be stored in a computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An audio recognition method, comprising:
acquiring a to-be-detected audio signal;
determining that an acquisition scenario of the to-be-detected audio signal is a first scenario according to the to-be-detected audio signal; and
determining, based on the to-be-detected audio signal by using a sound event recognition model corresponding to the first scenario, a sound event identified by the to-be-detected audio signal, wherein the sound event recognition model corresponding to the first scenario is a neural network model trained by using an audio signal in the first scenario and configured to identify a sound event in the first scenario based on the audio signal, wherein the to-be-detected audio signal comprises a plurality of audio frames; and
the determining that an acquisition scenario of the to-be-detected audio signal is a first scenario according to the to-be-detected audio signal comprises:
inputting each of the plurality of audio frames into a scenario recognition model, to obtain scenario information of each audio frame, wherein the scenario recognition model is a neural network model trained by using audio frames in a plurality of scenarios and configured to determine an acquisition scenario of an audio frame based on the audio frame, and the scenario information of each audio frame is used for indicating a probability that an acquisition scenario of each audio frame is each of the plurality of scenarios; and
determining that the acquisition scenario of the to-be-detected audio signal is the first scenario in the plurality of scenarios according to the scenario information of each audio frame.

2. The method according to claim 1, wherein the determining that the acquisition scenario of the to-be-detected audio signal is the first scenario in the plurality of scenarios according to the scenario information of each audio frame comprises:
collecting statistics on a quantity of audio frames belonging to each of the plurality of scenarios in the plurality of audio frames; and
determining the first scenario as the acquisition scenario of the to-be-detected audio signal when a quantity of audio frames belonging to the first scenario in the plurality of scenarios in the plurality of audio frames meets a first preset condition and a probability indicated by scenario information corresponding to the audio frames belonging to the first scenario in the plurality of audio frames meets a second preset condition.

3. The method according to any one of claims 1 or 2, wherein the scenario recognition model is trained based on audio frames in at least one of a road scenario, a subway scenario, a home scenario, or an office scenario.

4. The method according to any one of claims 1 to 3, wherein the to-be-detected audio signal comprises a plurality of audio frames, the sound event recognition model corresponding to the first scenario comprises at least one sound event recognition model, the at least one sound event recognition model comprises a first sound event recognition model, and the first sound event recognition model is trained by using an audio frame identifying a first sound event in the first scenario; and
the determining, based on the to-be-detected audio signal by using a sound event recognition model corresponding to the first scenario, a sound event identified by the to-be-detected audio signal comprises:
inputting the plurality of audio frames into the first sound event recognition model respectively, to obtain sound event information identified by the plurality of audio frames, wherein sound event information of each audio frame in the sound event information of the plurality of audio frames is used for indicating a probability that the each audio frame identifies the first sound event; and
determining, when sound event information identified by a first audio frame in the plurality of audio frames meets a third preset condition, the first sound event as the sound event identified by the to-be-detected audio signal.

5. The method according to claim 4, wherein the sound event information identified by the first audio frame meets the third preset condition, and sound event information identified by a second audio frame in a preset quantity of frames previous to the first audio frame meets a fourth preset condition, then a time point corresponding to the second audio frame is a start time point of the first sound event.

6. The method according to any one of claims 1 to 5, wherein the first scenario is the road scenario, and the sound event recognition model corresponding to the first scenario comprises at least one of the following:
a sound event recognition model for whistles, a sound event recognition model for alarm sounds, a sound event recognition model for crash sounds, or a sound event recognition model for car passing sounds.

7. The method according to any one of claims 1 to 5, wherein the first scenario is the subway scenario, and the sound event recognition model corresponding to the first scenario comprises at least one of the following:
a sound event recognition model for train passing sounds, a sound event recognition model for compartment crash sounds, or a sound event recognition model for subway station announcement sounds.

8. The method according to any one of claims 1 to 5, wherein the first scenario is the home scenario, and the sound event recognition model corresponding to the first scenario comprises at least one of the following:
a sound event recognition model for vacuum cleaning sounds of vacuum cleaners, a sound event recognition model for washing sounds of washing machines, a sound event recognition model for dish collision sounds, a sound event recognition model for infant crying, or a sound event recognition model for faucet dripping sounds.

9. The method according to any one of claims 1 to 5, wherein the first scenario is the office scenario, and the sound event recognition model corresponding to the first scenario comprises at least one of the following:
a sound event recognition model for ringtones, a sound event recognition model for keystroke sounds, or a sound event recognition model for meeting invitation sounds.

10. An audio recognition apparatus, comprising:
an acquisition module, configured to acquire a to-be-detected audio signal; and
a processing module, configured to: determine that an acquisition scenario of the to-be-detected audio signal is a first scenario according to the to-be-detected audio signal; and
determine, based on the to-be-detected audio signal by using a sound event recognition model corresponding to the first scenario, a sound event identified by the to-be-detected audio signal, wherein the sound event recognition model corresponding to the first scenario is a neural network model trained by using an audio signal in the first scenario and configured to identify a sound event in the first scenario based on the audio signal, wherein the to-be-detected audio signal comprises a plurality of audio frames; and
the processing module is further configured to:
input each of the plurality of audio frames into a scenario recognition model, to obtain scenario information of each audio frame, wherein the scenario recognition model is a neural network model trained by using audio frames in a plurality of scenarios and configured to determine an acquisition scenario of an audio frame based on the audio frame, and the scenario information of each audio frame is used for indicating a probability that an acquisition scenario of each audio frame is each of the plurality of scenarios; and
determine that the acquisition scenario of the to-be-detected audio signal is the first scenario in the plurality of scenarios according to the scenario information of each audio frame.

11. The apparatus according to claim 10, wherein the processing module is further configured to:
collect statistics on a quantity of audio frames belonging to each of the plurality of scenarios in the plurality of audio frames; and
determine the first scenario as the acquisition scenario of the to-be-detected audio signal when a quantity of audio frames belonging to the first scenario in the plurality of scenarios in the plurality of audio frames meets a first preset condition and a probability indicated by scenario information corresponding to the audio frames belonging to the first scenario in the plurality of audio frames meets a second preset condition.

12. An audio recognition apparatus, comprising a processor, wherein the processor is coupled to a memory, the memory is configured to store a computer program, and when the processor invokes the computer program, the apparatus is enabled to perform the method according to any one of claims 1 to 9.

13. A chip system, comprising a processor, configured to invoke a computer program from a memory and run the computer program, to enable a device provided with the chip system to implement the method according to any one of claims 1 to 9.

14. A computer-readable storage medium, configured to store a computer program, wherein the computer program comprises instructions for implementing the method according to any one of claims 1 to 9.

15. A computer program product, wherein the computer program product comprises computer program code, and when the computer program code runs on a computer, the computer is enabled to implement the method according to any one of claims 1 to 9.

## Patentansprüche

1. Ein Audioerkennungsverfahren, umfassend:
Erfassen eines zu erkennenden Audiosignals;
Bestimmen, dass ein Erfassungsszenario des zu erkennenden Audiosignals entsprechend dem zu erkennenden Audiosignal ein erstes Szenario ist; und
Bestimmen eines durch das zu erkennende Audiosignal identifizierten Klangereignisses auf Basis des zu erkennenden Audiosignals mittels eines dem ersten Szenario entsprechenden Klangereignis-Erkennungsmodells, wobei das dem ersten Szenario entsprechende Klangereignis-Erkennungsmodell ein durch Nutzung eines Audiosignals im ersten Szenario trainiertes neuronales Netzwerkmodell ist und dazu konfiguriert ist, ein Klangereignis im ersten Szenario basierend auf dem Audiosignal zu identifizieren, wobei das zu erkennende Audiosignal mehrere Audio-Frames umfasst; und
Das Bestimmen, dass ein Erfassungsszenario des zu erkennenden Audiosignals entsprechend dem zu erkennenden Audiosignal ein erstes Szenario ist, umfasst:
Das Eingeben jedes der mehreren Audio-Frames in ein Szenario-Erkennungsmodell, um Szenarioinformationen für jeden Audio-Frame zu erhalten, wobei das Szenario-Erkennungsmodell ein neuronales Netzwerkmodell ist, das mithilfe von Audio-Frames in mehreren Szenarien trainiert wurde und dazu konfiguriert ist, ein Erfassungsszenario eines Audio-Frames basierend auf dem Audio-Frame zu bestimmen, und wobei die Szenarioinformationen jedes Audio-Frames dazu verwendet werden, eine Wahrscheinlichkeit anzugeben, dass das Erfassungsszenario jedes Audio-Frames jeweils eines der mehreren Szenarien ist; und
Das Bestimmen, dass das Erfassungsszenario des zu erkennenden Audiosignals das erste Szenario in den mehreren Szenarien gemäß den Szenarioinformationen jedes Audio-Frames ist.

2. Verfahren nach Anspruch 1, wobei das Bestimmen, dass das Erfassungsszenario des zu erkennenden Audiosignals das erste Szenario in den mehreren Szenarien entsprechend den Szenarioinformationen jedes Audio-Frames ist, Folgendes umfasst:
Statistisches Erfassen einer Anzahl von Audio-Frames, die jeweils zu einem der mehreren Szenarien in den mehreren Audio-Frames gehören; und
Bestimmen des ersten Szenarios als Erfassungsszenario des zu erkennenden Audiosignals, wenn eine Anzahl von Audio-Frames, die zum ersten Szenario in den mehreren Szenarien in den mehreren Audio-Frames gehören, eine erste voreingestellte Bedingung erfüllt und eine durch die Szenarioinformationen entsprechende Wahrscheinlichkeit der zum ersten Szenario gehörenden Audio-Frames in den mehreren Audio-Frames eine zweite voreingestellte Bedingung erfüllt.

3. Verfahren nach einem der Ansprüche 1 oder 2, wobei das Szenenerkennungsmodell auf der Grundlage von Audio-Frames in mindestens einem der folgenden Szenarien trainiert wird: einem Straßenszenario, einem U-Bahn-Szenario, einem Hausszenario oder einem Büroszenario.

4. Verfahren nach einem der Ansprüche 1 bis 3, wobei das zu erkennende Audiosignal eine Vielzahl von Audio-Frames umfasst, das dem ersten Szenario entsprechende Schallerkennungsmodell mindestens ein Schallerkennungsmodell umfasst, das mindestens eine Schallerkennungsmodell ein erstes Schallerkennungsmodell umfasst und das erste Schallerkennungsmodell unter Verwendung eines Audio-Frames trainiert wird, der ein erstes Schallereignis im ersten Szenario identifiziert; und
das Bestimmen, basierend auf dem zu erkennenden Audiosignal unter Verwendung eines dem ersten Szenario entsprechenden Schallerkennungsmodells, eines vom zu erkennenden Audiosignal identifizierten Schallereignisses umfasst:
das Einbringen der Vielzahl von Audio-Frames jeweils in das erste Schallerkennungsmodell, um Schallereignisinformationen zu erhalten, die von der Vielzahl an Audio-Frames identifiziert wurden, wobei die Schallereignisinformationen jedes Audio-Frames in den Schallereignisinformationen der Vielzahl von Audio-Frames dazu verwendet werden, eine Wahrscheinlichkeit anzugeben, dass der jeweilige Audio-Frame das erste Schallereignis identifiziert; und
das Bestimmen, dass, wenn die von einem ersten Audio-Frame in der Vielzahl von Audio-Frames identifizierten Schallereignisinformationen eine dritte vorgegebene Bedingung erfüllen, das erste Schallereignis als das vom zu erkennenden Audiosignal identifizierte Schallereignis gilt.

5. Verfahren nach Anspruch 4, wobei, wenn die von dem ersten Audio-Frame identifizierten Schallereignisinformationen die dritte vorgegebene Bedingung erfüllen und die von einem zweiten Audio-Frame in einer vorgegebenen Anzahl von Frames vor dem ersten Audio-Frame identifizierten Schallereignisinformationen eine vierte vorgegebene Bedingung erfüllen, ein Zeitpunkt, der dem zweiten Audio-Frame entspricht, ein Startzeitpunkt des ersten Schallereignisses ist.

6. Verfahren nach einem der Ansprüche 1 bis 5, wobei das erste Szenario das Straßenszenario ist und das dem ersten Szenario entsprechende Schallerkennungsmodell mindestens eines der folgenden umfasst:
ein Schallerkennungsmodell für Pfeifen, ein Schallerkennungsmodell für Alarmsignale, ein Schallerkennungsmodell für Crashgeräusche oder ein Schallerkennungsmodell für vorbeifahrende Autos.

7. Verfahren nach einem der Ansprüche 1 bis 5, wobei das erste Szenario das U-Bahn-Szenario ist und das dem ersten Szenario entsprechende Schallerkennungsmodell mindestens eines der folgenden umfasst:
Ein Schallereigniserkennungsmodell für Zugdurchfahrtsgeräusche, ein Schallereigniserkennungsmodell für Abteilkollisionsgeräusche oder ein Schallereigniserkennungsmodell für Durchsagegeräusche in U-Bahn-Stationen.

8. Verfahren nach einem der Ansprüche 1 bis 5, wobei das erste Szenario das Hausszenario ist und das dem ersten Szenario entsprechende Schallereigniserkennungsmodell mindestens eines der folgenden umfasst:
Ein Schallereigniserkennungsmodell für die Staubsaugergeräusche von Staubsaugern, ein Schallereigniserkennungsmodell für Waschgeräusche von Waschmaschinen, ein Schallereigniserkennungsmodell für das Zusammenstoßen von Geschirr, ein Schallereigniserkennungsmodell für Babyweinen oder ein Schallereigniserkennungsmodell für tropfende Wasserhähne.

9. Verfahren nach einem der Ansprüche 1 bis 5, wobei das erste Szenario das Büroszenario ist und das dem ersten Szenario entsprechende Schallereigniserkennungsmodell mindestens eines der folgenden umfasst:
Ein Schallereigniserkennungsmodell für Klingeltöne, ein Schallereigniserkennungsmodell für Tastaturanschläge oder ein Schallereigniserkennungsmodell für Besprechungseinladungstöne.

10. Eine Audioerkennungsvorrichtung, umfassend:
ein Erfassungsmodul, das zum Erfassen eines zu detektierenden Audiosignals konfiguriert ist; und
ein Verarbeitungsmodul, das konfiguriert ist um: festzustellen, dass ein Erfassungsszenario des zu detektierenden Audiosignals gemäß dem zu detektierenden Audiosignal ein erstes Szenario ist; und
auf Grundlage des zu detektierenden Audiosignals mithilfe eines dem ersten Szenario entsprechenden Schallereigniserkennungsmodells das durch das zu detektierende Audiosignal identifizierte Schallereignis zu bestimmen, wobei das dem ersten Szenario entsprechende Schallereigniserkennungsmodell ein neuronales Netzwerkmodell ist, das mithilfe eines Audiosignals im ersten Szenario trainiert wurde und konfiguriert ist, ein Schallereignis im ersten Szenario basierend auf dem Audiosignal zu identifizieren, wobei das zu detektierende Audiosignal eine Vielzahl von Audioframes umfasst; und
das Verarbeitungsmodul ist ferner konfiguriert, um:
jeden der Vielzahl von Audioframes in ein Szenarienerkennungsmodell einzugeben, um Szenarieninformationen jedes Audioframes zu erhalten, wobei das Szenarienerkennungsmodell ein neuronales Netzwerkmodell ist, das mit Audioframes aus einer Vielzahl von Szenarien trainiert wurde und dazu ausgelegt ist, ein Erfassungsszenario eines Audioframes basierend auf dem Audioframe zu bestimmen, und die Szenarieninformation jedes Audioframes dazu verwendet wird, eine Wahrscheinlichkeit anzuzeigen, dass ein Erfassungsszenario jedes Audioframes jeweils eines der Vielzahl von Szenarien ist; und
bestimmen, dass das Erfassungsszenario des zu erkennenden Audiosignals das erste Szenario in der Mehrzahl der Szenarien entsprechend den Szenarioinformationen jedes Audioframes ist.

11. Vorrichtung nach Anspruch 10, wobei das Verarbeitungsmodul ferner dazu konfiguriert ist:
Statistiken über die Anzahl von Audioframes zu sammeln, die jeweils zu einem der mehreren Szenarien in den mehreren Audioframes gehören; und
das erste Szenario als Erfassungsszenario des zu erkennenden Audiosignals zu bestimmen, wenn die Anzahl der zugehörigen Audioframes des ersten Szenarios in der Mehrzahl der Szenarien unter den Audioframes eine erste vorgegebene Bedingung erfüllt und die durch Szenarioinformationen angegebene Wahrscheinlichkeit der zugehörigen Audioframes des ersten Szenarios in den mehreren Audioframes eine zweite vorgegebene Bedingung erfüllt.

12. Audioerkennungsvorrichtung, umfassend einen Prozessor, wobei der Prozessor mit einem Speicher gekoppelt ist, der Speicher dazu konfiguriert ist, ein Computerprogramm zu speichern, und wenn der Prozessor das Computerprogramm aufruft, die Vorrichtung in die Lage versetzt wird, das Verfahren gemäß einem der Ansprüche 1 bis 9 auszuführen.

13. Chipsystem, umfassend einen Prozessor, der dazu konfiguriert ist, ein Computerprogramm aus einem Speicher abzurufen und das Computerprogramm auszuführen, um ein Gerät mit dem Chipsystem zu befähigen, das Verfahren gemäß einem der Ansprüche 1 bis 9 umzusetzen.

14. Computerlesbares Speichermedium, konfiguriert zum Speichern eines Computerprogramms, wobei das Computerprogramm Anweisungen zum Ausführen des Verfahrens gemäß einem der Ansprüche 1 bis 9 umfasst.

15. Computerprogrammprodukt, wobei das Computerprogrammprodukt Computercode umfasst und, wenn der Computercode auf einem Computer ausgeführt wird, der Computer in die Lage versetzt wird, das Verfahren gemäß einem der Ansprüche 1 bis 9 zu implementieren.

## Revendications

1. Un procédé de reconnaissance audio, comprenant :
l'acquisition d'un signal audio à détecter ;
la détermination que le scénario d'acquisition du signal audio à détecter est un premier scénario selon ledit signal audio à détecter ; et
la détermination, sur la base du signal audio à détecter en utilisant un modèle de reconnaissance d'événements sonores correspondant au premier scénario, d'un événement sonore identifié par ledit signal audio à détecter, le modèle de reconnaissance d'événements sonores correspondant au premier scénario étant un modèle de réseau de neurones entraîné à l'aide d'un signal audio dans le premier scénario et configuré pour identifier un événement sonore dans le premier scénario sur la base du signal audio, ledit signal audio à détecter comportant une pluralité de trames audio ; et
la détermination que le scénario d'acquisition du signal audio à détecter est un premier scénario selon ledit signal audio à détecter comprend :
l'introduction de chacune des trames audio multiples dans un modèle de reconnaissance de scénario, pour obtenir l'information de scénario de chaque trame audio, le modèle de reconnaissance de scénario étant un modèle de réseau de neurones entraîné à l'aide de trames audio dans une pluralité de scénarios et configuré pour déterminer un scénario d'acquisition d'une trame audio sur la base de la trame audio, et l'information de scénario de chaque trame audio étant utilisée pour indiquer une probabilité que le scénario d'acquisition de chaque trame audio soit chacun des multiples scénarios ; et
la détermination que le scénario d'acquisition du signal audio à détecter est le premier scénario parmi la pluralité de scénarios selon l'information de scénario de chaque trame audio.

2. Le procédé selon la revendication 1, dans lequel la détermination que le scénario d'acquisition du signal audio à détecter est le premier scénario parmi la pluralité de scénarios selon l'information de scénario de chaque trame audio comprend :
rassembler des statistiques sur la quantité de trames audio appartenant à chacun des multiples scénarios dans la pluralité de trames audio ; et
déterminer le premier scénario comme scénario d'acquisition du signal audio à détecter lorsqu'une quantité de trames audio appartenant au premier scénario parmi les multiples scénarios dans la pluralité de trames audio satisfait à une première condition prédéfinie et qu'une probabilité indiquée par l'information de scénario correspondant aux trames audio appartenant au premier scénario parmi la pluralité de trames audio satisfait à une deuxième condition prédéfinie.

3. Procédé selon l'une quelconque des revendications 1 ou 2, dans lequel le modèle de reconnaissance de scénario est entraîné sur la base de trames audio dans au moins l'un des scénarios suivants : un scénario routier, un scénario de métro, un scénario domestique ou un scénario de bureau.

4. Procédé selon l'une quelconque des revendications 1 à 3, dans lequel le signal audio à détecter comprend une pluralité de trames audio, le modèle de reconnaissance d'événement sonore correspondant au premier scénario comprend au moins un modèle de reconnaissance d'événement sonore, le ou les modèles de reconnaissance d'événement sonore comprennent un premier modèle de reconnaissance d'événement sonore, et le premier modèle de reconnaissance d'événement sonore est entraîné à l'aide d'une trame audio identifiant un premier événement sonore dans le premier scénario ; et
la détermination, sur la base du signal audio à détecter à l'aide d'un modèle de reconnaissance d'événements sonores correspondant au premier scénario, d'un événement sonore identifié par le signal audio à détecter comprend :
l'entrée de la pluralité de trames audio dans le premier modèle de reconnaissance d'événement sonore respectivement, afin d'obtenir des informations d'événement sonore identifiées par la pluralité de trames audio, où l'information d'événement sonore de chaque trame audio dans les informations d'événement sonore de la pluralité de trames audio est utilisée pour indiquer la probabilité que chaque trame audio identifie le premier événement sonore ; et
la détermination, lorsque l'information d'événement sonore identifiée par une première trame audio dans la pluralité de trames audio remplit une troisième condition prédéfinie, que le premier événement sonore est l'événement sonore identifié par le signal audio à détecter.

5. Procédé selon la revendication 4, dans lequel l'information d'événement sonore identifiée par la première trame audio satisfait la troisième condition prédéfinie, et l'information d'événement sonore identifiée par une seconde trame audio dans une quantité prédéfinie de trames précédant la première trame audio satisfait une quatrième condition prédéfinie, alors un point temporel correspondant à la seconde trame audio est un point de départ du premier événement sonore.

6. Procédé selon l'une quelconque des revendications 1 à 5, dans lequel le premier scénario est le scénario routier, et le modèle de reconnaissance d'événements sonores correspondant au premier scénario comprend au moins l'un des éléments suivants :
un modèle de reconnaissance d'événements sonores pour sifflets, un modèle de reconnaissance d'événements sonores pour sons d'alarme, un modèle de reconnaissance d'événements sonores pour sons de collision, ou un modèle de reconnaissance d'événements sonores pour véhicules passant.

7. Procédé selon l'une quelconque des revendications 1 à 5, dans lequel le premier scénario est le scénario de métro, et le modèle de reconnaissance d'événements sonores correspondant au premier scénario comprend au moins l'un des éléments suivants :
un modèle de reconnaissance d'événements sonores pour des sons de passage de train, un modèle de reconnaissance d'événements sonores pour des sons de collision de compartiments, ou un modèle de reconnaissance d'événements sonores pour des annonces en station de métro.

8. Procédé selon l'une quelconque des revendications 1 à 5, dans lequel le premier scénario est le scénario domestique, et le modèle de reconnaissance d'événements sonores correspondant au premier scénario comprend au moins l'un des éléments suivants :
un modèle de reconnaissance d'événements sonores pour les bruits d'aspirateur, un modèle de reconnaissance d'événements sonores pour les bruits de lavage de machines à laver, un modèle de reconnaissance d'événements sonores pour les chocs de vaisselle, un modèle de reconnaissance d'événements sonores pour les pleurs de nourrisson, ou un modèle de reconnaissance d'événements sonores pour les bruits de goutte-à-goutte de robinet.

9. Procédé selon l'une quelconque des revendications 1 à 5, dans lequel le premier scénario est le scénario de bureau, et le modèle de reconnaissance d'événements sonores correspondant au premier scénario comprend au moins l'un des éléments suivants :
un modèle de reconnaissance d'événements sonores pour les sonneries, un modèle de reconnaissance d'événements sonores pour les bruits de frappe sur clavier, ou un modèle de reconnaissance d'événements sonores pour les sons d'invitation à une réunion.

10. Un appareil de reconnaissance audio, comprenant :
un module d'acquisition, configuré pour acquérir un signal audio à détecter ; et
un module de traitement, configuré pour : déterminer qu'un scénario d'acquisition du signal audio à détecter est un premier scénario selon le signal audio à détecter ; et
déterminer, sur la base du signal audio à détecter en utilisant un modèle de reconnaissance d'événements sonores correspondant au premier scénario, un événement sonore identifié par le signal audio à détecter, le modèle de reconnaissance d'événements sonores correspondant au premier scénario étant un modèle de réseau de neurones entraîné à l'aide d'un signal audio dans le premier scénario et conçu pour identifier un événement sonore dans le premier scénario à partir du signal audio, le signal audio à détecter comprenant une pluralité de trames audio ; et
le module de traitement est en outre configuré pour :
injecter chacune des multiples trames audio dans un modèle de reconnaissance de scénario, afin d'obtenir des informations de scénario pour chaque trame audio, le modèle de reconnaissance de scénario étant un modèle de réseau de neurones entraîné à l'aide de trames audio dans une pluralité de scénarios et conçu pour déterminer un scénario d'acquisition d'une trame audio à partir de la trame audio, et les informations de scénario pour chaque trame audio servant à indiquer la probabilité qu'un scénario d'acquisition de chaque trame audio corresponde à chacun des multiples scenarios; et
déterminer que le scénario d'acquisition du signal audio à détecter est le premier scénario parmi la pluralité de scénarios selon les informations de scénario de chaque trame audio.

11. L'appareil selon la revendication 10, dans lequel le module de traitement est en outre configuré pour :
collecter des statistiques sur la quantité de trames audio appartenant à chacun des scénarios parmi la pluralité de trames audio ; et
déterminer le premier scénario comme scénario d'acquisition du signal audio à détecter lorsqu'une quantité de trames audio appartenant au premier scénario parmi la pluralité de scénarios dans la pluralité de trames audio satisfait une première condition prédéfinie, et qu'une probabilité indiquée par les informations de scénario correspondant aux trames audio appartenant au premier scénario dans la pluralité de trames audio satisfait une seconde condition prédéfinie.

12. Un appareil de reconnaissance audio, comprenant un processeur, où le processeur est couplé à une mémoire, la mémoire étant configurée pour stocker un programme informatique, et lorsqu'il invoque le programme informatique, l'appareil est apte à exécuter la méthode selon l'une quelconque des revendications 1 à 9.

13. Un système sur puce, comprenant un processeur, configuré pour invoquer un programme informatique depuis une mémoire et exécuter le programme, afin de permettre à un dispositif équipé du système sur puce de mettre en œuvre la méthode selon l'une quelconque des revendications 1 à 9.

14. Un support de stockage lisible par ordinateur, configuré pour stocker un programme informatique, ledit programme comprenant des instructions pour mettre en œuvre la méthode selon l'une quelconque des revendications 1 à 9.

15. Un produit programme d'ordinateur, le produit comprenant un code de programme informatique, et lorsque ce code est exécuté sur un ordinateur, ce dernier est apte à mettre en œuvre la méthode selon l'une quelconque des revendications 1 à 9.
